# EUROPEAN PATENT APPLICATION

(11) **EP 4 418 422 A1**
(43) Date of publication of application: **21.08.2024**
(21) Application number: 23156676.1
(22) Date of filing: 15.02.2023
(51) Int. Cl.: H01M 50/242, B62D 27/06, H01M 50/244, H01M 50/249

(54) **ADHESIVELY BONDED AND FASTENED ASSEMBLY FOR BATTERY HOLDER, AND BATTERY HOLDER FOR TRANSPORT VEHICLE**

(71) Applicant: Constellium Singen GmbH, 78224 Singen (DE); Constellium UK Limited, Burnham, SL1 8DF (GB)
(72) Inventor: PATRINOS, Panagiotis, LONDRES, W53HR (GB); BEN TAHAR, Mehdi, 38000 GRENOBLE (FR); HAMMOND, William, STORRINGTON, RH204DD (GB)
(74) Representative: Constellium - Propriété Industrielle

(57) **Abstract**

The invention concerns an assembly (1) for battery holder comprising a first structural element (10) ; a second profile (30) presenting a hollow section delimiting internally an adhesion surface (s30), and a mating cavity (31); a junction organ (50) inserted inside the mating cavity (31) and comprising at least one fixing hole (51), the junction organ (50) comprising externally a junction surface (s50) facing the adhesion surface (s30); an adhesive agent (20) interposed between the junction surface (s50) and the adhesion surface (s30), the adhesive agent (20) being configured to allow an adhesion between the junction surface (s50) and said adhesion surface (s30) ; and a fixing member (40) comprising a fixing rod (41) screwed into the fixing hole (51); the fixing member (40) and the junction organ (50) being thereby configured to secure the first structural element (10) with the second profile (30).

## Description

### TECHNICAL FIELD OF THE INVENTION

This invention relates to the field of electric or hybrid motorized transport vehicle, and more particularly to a battery holder intended to receive all or part of a battery to be supported by the battery holder.

More particularly, the invention relates to an assembly for such a battery holder.

### BACKGROUND

The state of the art described below presents applications in the field of electric or hybrid vehicles, but it could also relate to other fields or applications requiring the use of a battery holder.

It is known from the state of the art to use a battery enclosure presenting a structural frame designed to support the battery, and eventually to protect the battery cells or modules from damages in the event of side impact, or shock and from environmental ingresses. Said battery enclosure generally comprises the following elements:
- a circumferential structural frame usually fastened into the vehicle body structure using a bolting system;
- a floor closing the bottom of the frame and configured to receive all or part of the battery cells or modules;
- a lid made of plastic, steel or aluminum and placed on top of the above structure to seal completely the battery enclosure.

The role of said enclosure is to hold and protect the cells or the modules of the battery. However, depending on the needs, and depending on the type of battery cells or modules intended to be held by the battery holder, the shape for the overall structure of the frame can change drastically. Indeed, the battery system for an electric vehicle is built by a combination of individual cells. Generally, there are three main cell types which can determine the geometry, the size, the range as well as the vulnerability of the energy storage system. Consequently, the type of cells selected will influence the final design and shape of the battery enclosures.

A first main characteristics that a battery enclosure should have is that it needs to be sufficiently robust to reduce the chances of deforming when the vehicle is involved in a miss-use situation or in an accident. For this reason the battery enclosure must have sufficient strength in order to reduce the chances of damaging internals of the enclosure, which could eventually cause serious damage to the vehicle and its surroundings.

A second primordial characteristics a battery enclosure must have is that it must meet standards that are mandatory, such as leak tightness. That is to say that no water or any other debris must penetrate the battery enclosure. A key parameter allowing to meet this requirement is to ensure a battery enclosure showing good flatness, especially to seal the lid on top of the above structure of the battery enclosure or the bottom floor to the bottom of the above structure. However, when assembling the frame parts constituting the frame, it is needed to use welding to secure the frame parts with each other. Welding can generate distortion in the frame structure and induce irregularities in the flatness of the frame. To overcome such distortion, a machining operation could be needed, which may add significant cost and additional weight.

Finally, an important technical characteristic that a battery enclosure should have is a light weight, to reduce the overall energy consumption of the vehicle and its cost.

To reduce the weight of the frame, it is known to use hollow profile. In order to minimize the manufacturing cost of hollow profiles, they are generally extruded. Cast can also be considered when complex frame shape has to be designed. In other cases, a combination of casts and hollow extrusion can be considered.

It is known from the state of the art to use dedicated organs that forms the nodes between two adjacent profiles. Document US20180186227A1 discloses a first type of node which is bolted on one hand to the first structural element, and in the other hand to the second profile. Document DE102017117093A1 and DE102016121252B4 discloses another solution where the nodes are welded to the profiles. However, by using those techniques it is not apparent that they could both show a good mechanical resistance, along with a good leak tightness.

Besides, using welding to secure profiles could raises distortion between the profiles, which could generate geometrical defect in the battery holder. Alternative joining methods by fastening the first profile to the second profile are known from the state of the art. However, those techniques require to provision for additional feature in the design of the profile to host the threaded hole. Such feature will be present along the whole length of the profile one or two while being needed only for the extremities. Such approach leads to a weight and a cost penalty. This type of technical solutions is very well known in aluminum construction in building (e.g. doors, windows), however it is not guaranteed that they will demonstrate sufficient strength.

### SUMMARY OF THE INVENTION

The present invention aim at solving the aforementioned problems. To this end, the invention concerns an assembly for battery holder comprising:
- a first structural element extending in a first direction and comprising a first bearing surface;
- a second profile extending in a second direction, distinct from the first direction, the second profile presenting a hollow section delimiting internally an adhesion surface, and a mating cavity;
- a junction organ inserted inside the mating cavity of the second profile and comprising at least one fixing hole, the junction organ comprising externally a junction surface facing the adhesion surface;
- an adhesive agent interposed between the junction surface of the junction organ and the adhesion surface of the second profile, the adhesive agent being configured to allow an adhesion between the junction surface and said adhesion surface;
- a fixing member comprising a fixing rod screwed into the fixing hole of the junction organ, and a bearing head attached to the fixing rod and leaning on the first bearing surface of the first structural element so as to secure by pinching the first structural element with the junction organ;
the fixing member and the junction organ being thereby configured to secure the first structural element with the second profile.

The arrangements described above make it possible to provide an assembly for battery holder wherein an inserted junction organ allows to secure on one hand the first structural element by screwing, and on the other hand the second profile by adhesion. Advantageously, an adhesion bounding between different structural elements, such as profiles of the battery holder allows connecting two or more structural elements without needing welding technology, while ensuring good structural performance. Moreover, adhesive bounding can be more easily performed at large scale, and limits distortion between the first structural element and the second profile, which is a cost-effective solution to manufacture battery holders.

According to one embodiment, the assembly comprises on or more of the following features, taken alone or in combination.

According to one embodiment, the fixing hole is a threaded hole, and the fixing member is a screw or a bolt adapted to be screwed in the threaded hole.

According to one embodiment, the first structural element is a profile, for example and extruded profile.

By "profile" we mean a structural element which extends along a direction, said structural element can be manufactured by molding, stamping, roll forming, extrusion, or any other manufacturing method. In case the profile comprises polymeric material, said profile can be manufactured by injection.

According to one embodiment, the first direction is sensibly perpendicular to the second direction. However, the first direction can form an angle with the second direction, said angle being strictly comprised between 0° and 360°, and different from 180°, and notably strictly comprised between 20° and 340°.

According to one embodiment, the second profile is an extruded profile.

According to one embodiment, the first structural element comprises a first cooperation surface opposite to the first bearing surface compared to the first structural element, and the junction organ comprises externally a surface of contact extending transversally to the junction surface, the surface of contact of the junction organ being configured to lean on the first cooperation surface of the first structural element when the first structural element is secured to the junction organ via the fixing member.

According to one embodiment an adhesive may be applied between the bearing surface of the first structural element and the junction organ in order to improve stiffness and/or strength of the assembly.

According to one embodiment, the junction organ comprises an end portion of contact, protruding outside the mating cavity so as to define a gap between the first structural element and the second profile when they are secured with each other via the fixing member and the junction organ.

According to one embodiment, the end portion of contact comprises the surface of contact.

According to one embodiment, the assembly comprises further a component disposed in the gap between the first structural element and the second profile, said component being configured to prevent the ingress of a liquid or dust between the first structural element and the second profile at the level of the junction organ.

According to one embodiment, the component is an adhesive, a sealant or a jointing agent According to one embodiment, the junction surface of the junction organ comprises blocking asperities configured to block a translation of the junction organ inside the mating cavity along the second direction.

Advantageously, the blocking asperities allows to increase an area of adhesion between the adhesion surface and the adhesive agent. Thus, the adhesion between the second profile and the junction organ is improved.

According to one embodiment, the junction organ comprises an expendable element comprising the junction surface, and an internal element configured to be inserted inside the expendable element, and to provoke an extension of the expendable element so as to push the junction surface towards the adhesion surface when said internal element is inserted inside the expendable element.

According to one embodiment, the internal element is a solid element in one piece.

According to one embodiment, the internal element presents a cross-section counted perpendicularly to the second direction which progressively increase, to form externally a ramp configured to provoke the extension of the expendable element when the internal element is inserted inside the expendable element.

According to one embodiment, the expendable element comprises at least one expendable agent comprising a main body which comprises part of the fixing hole, and at least two lateral tabs comprising the junction surface, each lateral tab being fixedly attached to the main body, and being expendable towards the adhesion surface.

According to one embodiment, the expendable agent comprises a general U shape, wherein each lateral tab comprises a proximal end fixedly attached to the main body, and a free distal end opposed to the proximal end.

According to one embodiment, the expendable element comprises a first expendable agent, and a second expendable agent, the lateral tabs of the first expendable agent being angularly offset from the lateral tabs of the second expendable agent around the second direction.

According to one embodiment, an angular offset between the lateral tabs of the first expendable agent and the lateral tabs of the second expendable agent is sensibly equal to 90°.

According to one embodiment, the junction organ is a solid element in one piece or a hollow profile

According to one embodiment, the junction organ comprises a polymer.

According to one embodiment, the junction organ consists in a polymeric junction organ. In other words, the junction organ is only made by a polymeric material.

According to one embodiment, the junction organ comprises a metallic material, for example aluminum.

According to one embodiment, the junction organ consists in a metallic junction organ, for example an aluminum junction organ. In other words, the junction organ is only made by a metallic material, for example aluminum.

The object of the invention may also be achieved by implementing a battery holder for a transport vehicle, the battery holder comprising a frame and a floor delimiting between them a housing intended to receive all or part of a battery, said frame comprising at least one assembly as previously described.

The object of the invention may also be achieved by implementing an electric or hybrid motorized transport vehicle comprising a battery holder as previously described.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:
Figure 1 represents schematically a sectional view of an assembly according to one embodiment of the invention.
Figure 2 represents schematically a perspective view of a second profile and two junction organs of an assembly according to one embodiment of the invention.
Figure 3 represents schematically a perspective view of a junction organ comprising an internal element and an expandable element according to one embodiment of the invention.
Figure 4 represents schematically a sectional view of the junction organ of figure 3.
Figure 5 represents schematically a perspective view of a junction organ comprising an internal element and an expandable element according to another embodiment of the invention.
Figure 6 represents schematically a sectional view of the junction organ of figure 5.

### DETAILED DESCRIPTION

In the figures and in the remainder of the description, the same references represent identical or similar elements. In addition, the various elements are not represented to scale so as to favor the clarity of the figures. Furthermore, the different embodiments and variants are not mutually exclusive and can be combined with one another.

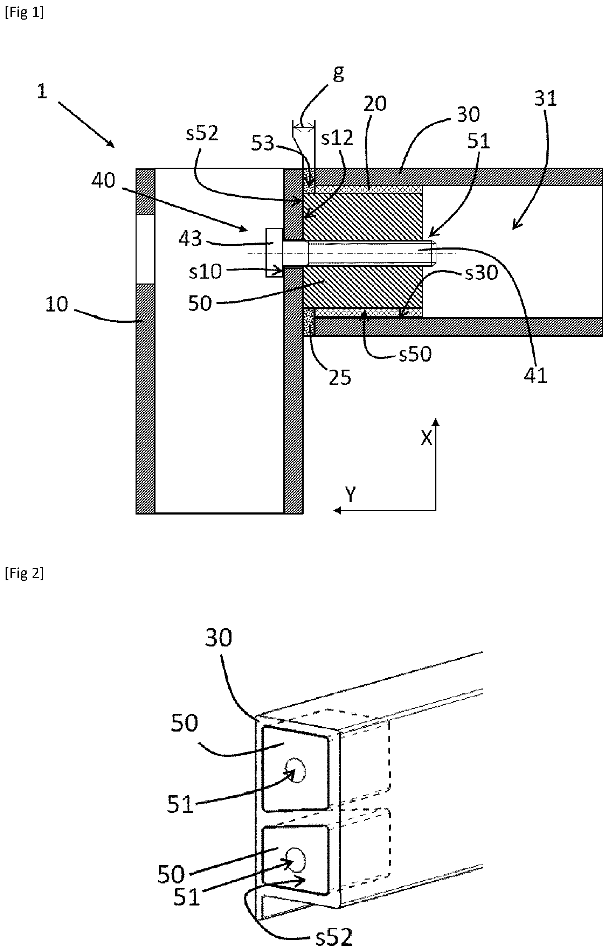

As illustrated in figure 1, the invention concerns an assembly 1 for battery holder, and concerns also a battery holder included in a transport vehicle. For example, the transport vehicle may be an electric or hybrid motorized transport vehicle. The battery holder comprises a frame and a floor delimiting between them a housing intended to receive all or part of a battery, said frame comprising at least one assembly 1 of the type described below.

The assembly 1 comprises a first structural element 10 extending in a first direction noted "X" and comprising a first bearing surface s10. The first structural element 10 can comprise a first cooperation surface s12 opposite to the first bearing surface s10 compared to the first structural element 10. For example, the first structural element 10 is a profile, and more particularly, an extruded profile. By "profile" we mean a structural element which extends along a direction, said structural element can be manufactured by molding, stamping, roll forming, extrusion, or any other manufacturing method. In case the profile comprises polymeric material, said profile can be manufactured by injection.

The assembly comprises also a second profile 30 extending in a second direction noted "Y", distinct from the first direction X. As shown on figure 1, the first direction X can be sensibly perpendicular to the second direction Y. However, the first direction X can form any angle with the second direction Y, said angle being strictly comprised between 0° and 360°. Like the first structural element 10, the second profile 30 can be an extruded profile. Extrusion is a cost-effective solution to manufacture profiles. The second profile 30 presents a hollow section, and delimits internally an adhesion surface s30, and a mating cavity 31. The adhesion surface s30 covers all or part of a face of the second profile 30. The adhesion surface s30 may also cover one or several internal faces of the second profile 30.

A junction organ 50 is inserted inside the mating cavity 31 of the second profile 30. As illustrated on figure 1 or 2, the junction organ 50 can be a solid element in one piece or a hollow profile. For example, the junction organ 50 comprises a polymer or consists in a polymeric junction organ 50. In other words, the junction organ 50 can thus only be made by a polymeric material. Alternatively, the junction organ may comprise a metallic material, for example aluminum, or may consist in a metallic junction organ, for example an aluminum junction organ. In other words, the junction organ can thus only be made by a metallic material, for example aluminum.

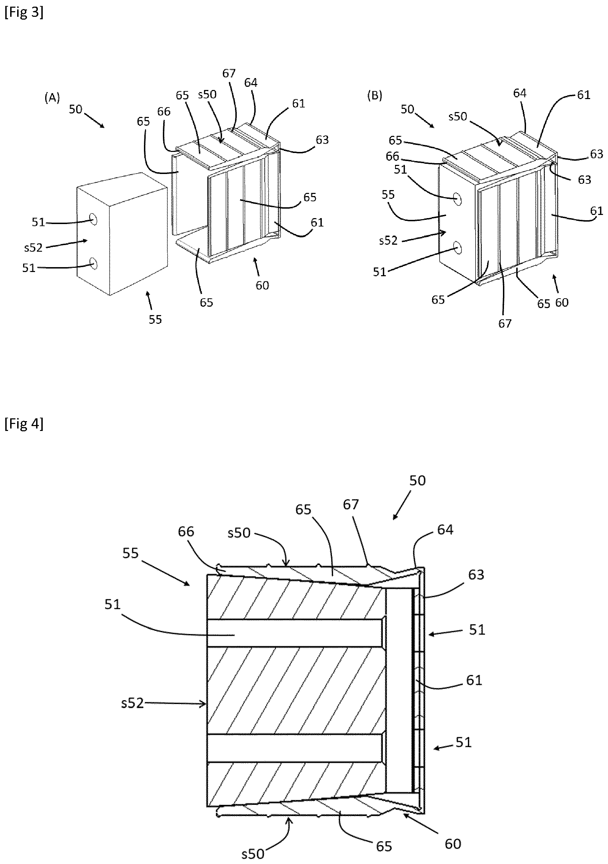

The junction organ 50 comprises at least one fixing hole 51. According to a first variant represented on figure 2, the second profile 30 comprises two mating cavities inside of which are inserted two junction organs 50, each comprising a fixing hole 51. According to other variants represented on figures 3 to 6, the junction organ 50 comprises two fixing holes 51.

The junction organ 50 comprising externally a junction surface s50 facing the adhesion surface s30 of the second profile 30. Generally, the junction organ 50 comprises externally a surface of contact s52 extending transversally to the junction surface s50. Said surface of contact s52 of the junction organ 50 is then configured to lean on the first cooperation surface s12 of the first structural element 10, notably when the first structural element 10 is secured to the junction organ 50 via a fixing member 40. In that case, it is possible to apply an adhesive between the first bearing surface s12 of the first structural element 10 and the junction organ 50 in order to improve stiffness and/or strength of the assembly 1.

Advantageously, and as illustrated on figure 1, the junction organ 50 may comprise an end portion of contact 53, protruding outside the mating cavity 31 so as to define a gap, referenced "g", between the first structural element 10 and the second profile 30 when they are secured with each other via the junction organ 50. In this configuration, the end portion of contact 53 comprises the surface of contact s52. As a consequence, the assembly 1 may include a component 25 disposed in the gap g between the first structural element 10 and the second profile 30. The component 25 is then configured to prevent the ingress of a liquid or dust between the first structural element 10 and the second profile 30 at the level of the junction organ 50. For example, the component 25 is an adhesive, a sealant or a jointing agent.

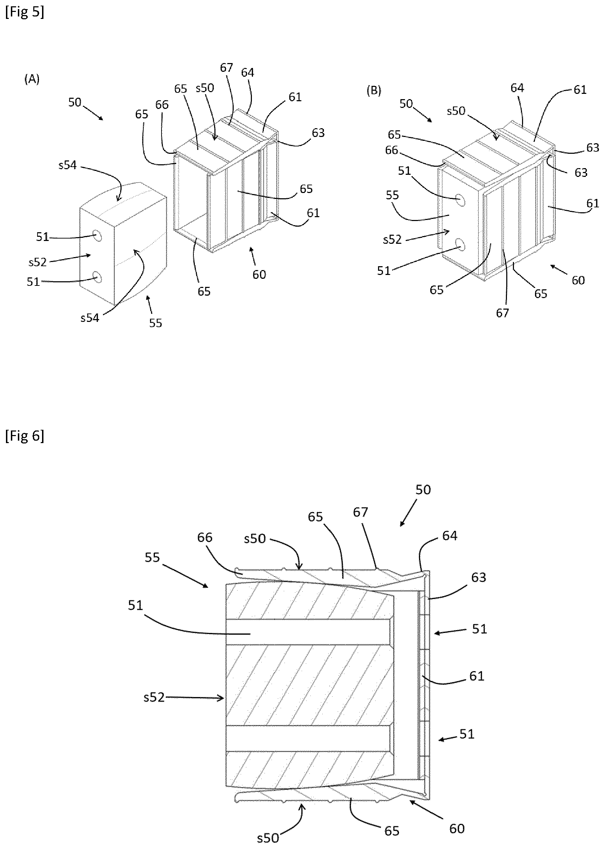

Referring now to the non-limitative variants represented on figures 3 to 6, the junction organ 50 can comprise an expendable element 60 comprising the junction surface s50, and an internal element 55 configured to be inserted inside the expendable element 60, and to provoke an extension of the expendable element 60 so as to push the junction surface s50 towards the adhesion surface s30 when said internal element 55 is inserted inside the expendable element 60. Said internal element 55 can be a solid element in one piece. In order to provoke the extension of the expendable element 60 upon insertion of the internal element 55 inside the expendable element 60, it is possible to provide an internal element 55 presenting a cross-section counted perpendicularly to the second direction Y which increase between an end portion of the internal element 55 facing a main body 63 of the expendable element 60, and an end portion opposite to the main body 63 of the expendable element 60. According to the variant represented on figures 3 and 4, the cross-section of the internal element 55 counted perpendicularly to the second direction Y progressively increase. In that case, the internal element 55 forms externally a ramp configured to provoke the extension of the expendable element 60. Alternatively, and as illustrated on figures 5 and 6, the internal element 55 may comprise cambered or curved lateral faces s54. In other words, the lateral faces s54 are convex whose vertex of convexity is turned towards the expandable element 60, for example towards lateral tabs 65 of the expendable element 60 that will be described below. Advantageously, the presence of cambered lateral faces s54 on the internal element 55 allows the internal element 55 to rotate when a misalignment between the internal element 55 and the expandable element 60 occurs. As a result, curved or cambered lateral faces s54 allows to compensate eventual distortion of the first structural element 10 and/or of the second profile 30. Thus, assembling the assembly 1 is facilitated.

According to the variants represented on figures 3 to 6, the expendable element 60 comprises at least one expendable agent 61 comprising a main body 63 which comprises part of the fixing hole 51, the rest of the fixing hole 51 being housed inside the internal element 55. It is well understood that when the internal element 55 is inserted inside the expendable element 60, the part of the fixing hole 51 housed in the internal element 55 faces the part of the fixing hole 51 included in the expandable element 60. By this way, it is possible to provide a junction organ 50 with a continuous fixing hole 51 which is going through both the internal element 55, and the expandable element 60.

The at least one expendable agent 61 can further comprise at least two lateral tabs 65 comprising the junction surface s50. Each lateral tab 65 is fixedly attached to the main body 63, and is expendable towards the adhesion surface s30. For example, said at least one expendable agent 61 comprises a general U shape, wherein each lateral tab 65 comprises a proximal end 64 fixedly attached to the main body 63, and a free distal end 66 opposed to the proximal end 64.

The variants of figures 3 to 6 represent an expendable element 60 comprising a first expendable agent 61, and a second expendable agent 61. Figures 3 A, and 5A illustrate the junction organ 50 when the internal element 55 is outside the expendable element 60. Figures 3 B, and 5 B illustrate the junction organ 50 when the internal element 55 is inserted inside the expendable element 60, showing by this way, the expansion of the lateral tabs 65. Moreover, the lateral tabs 65 of the first expendable agent 61 are angularly offset from the lateral tabs 65 of the second expendable agent 61 around the second direction Y. To simply the assembly of the expandable element 60, an angular offset between the lateral tabs 65 of the first expendable agent 61 and the lateral tabs 65 of the second expendable agent 61 can be sensibly equal to 90°.

The assembly 1 further comprises an adhesive agent 20 interposed between the junction surface s50 of the junction organ 50 and the adhesion surface s30 of the second profile 30, the adhesive agent 20 is configured to allow an adhesion between the junction surface s50 and said adhesion surface s30. As indicated before, the adhesion surface s30 covers all or part of a face, or of all faces of the second profile 30. Besides, the adhesive agent 20 can be disposed on all or part of the adhesion surface s30.

It can be advantageous that, the junction surface s50 of the junction organ 50 comprises blocking asperities 67 configured to block a translation of the junction organ 50 inside the mating cavity 31 along the second direction Y. Thus, the blocking asperities 67 allows to increase an area of adhesion between the adhesion surface s30 and the adhesive agent 20. Thus, the adhesion between the second profile 30 and the junction organ 50 is improved.

Finally, the assembly comprises the fixing member 40 comprising a fixing rod 41 screwed into the fixing hole 51 of the junction organ 50, and a bearing head 43 attached to the fixing rod 41 and leaning on the first bearing surface s10 of the first structural element 10 so as to secure by pinching the first structural element 10 with the junction organ 50. Thus, the fixing member 40 and the junction organ 50 are configured to secure the first structural element 10 with the second profile 30. For example, the fixing hole 51 is a threaded hole, and the fixing member 40 is a screw or a bolt adapted to be screwed in the threaded hole.

The arrangements described above make it possible to provide an assembly 1 for battery holder wherein an inserted junction organ 50 allows to secure on one hand the first structural element 10 by screwing, and on the other hand the second profile 30 by adhesion. Advantageously, an adhesion bounding between different structural elements, such as profiles of the battery holder allows connecting two or more structural elements without needing welding technology, while ensuring good structural performance. Moreover, adhesive bounding can be more easily performed at large scale, and limits distortion between the first structural element 10 and the second profile 30, which is a cost effective solution to manufacture battery holders.

## Claims

1. Assembly (1) for battery holder comprising:
- a first structural element (10) extending in a first direction (X) and comprising a first bearing surface (s10);
- a second profile (30) extending in a second direction (Y), distinct from the first direction (X), the second profile (30) presenting a hollow section delimiting internally an adhesion surface (s30), and a mating cavity (31);
- a junction organ (50) inserted inside the mating cavity (31) of the second profile (30) and comprising at least one fixing hole (51), the junction organ (50) comprising externally a junction surface (s50) facing the adhesion surface (s30);
- an adhesive agent (20) interposed between the junction surface (s50) of the junction organ (50) and the adhesion surface (s30) of the second profile (30), the adhesive agent (20) being configured to allow an adhesion between the junction surface (s50) and said adhesion surface (s30) ;
- a fixing member (40) comprising a fixing rod (41) screwed into the fixing hole (51) of the junction organ (50), and a bearing head (43) attached to the fixing rod (41) and leaning on the first bearing surface (s10) of the first structural element (10) so as to secure by pinching the first structural element (10) with the junction organ (50);
the fixing member (40) and the junction organ (50) being thereby configured to secure the first structural element (10) with the second profile (30).

2. Assembly (1) according to claim 1, wherein the first structural element (10) comprises a first cooperation surface (s12) opposite to the first bearing surface (s10) compared to the first structural element (10), and wherein the junction organ (50) comprises externally a surface of contact (s52) extending transversally to the junction surface (s50), the surface of contact (s52) of the junction organ (50) being configured to lean on the first cooperation surface (s12) of the first structural element (10) when the first structural element (10) is secured to the junction organ (50) via the fixing member (40).

3. Assembly (1) according to any one of claims 1 or 2, wherein the junction organ (50) comprises an end portion of contact (53), protruding outside the mating cavity (31) so as to define a gap (g) between the first structural element (10) and the second profile (30) when they are secured with each other via the fixing member (40) and the junction organ (50).

4. Assembly (1) according to claim 3, comprising further a component (25) disposed in the gap (g) between the first structural element (10) and the second profile (30), said component (25) being configured to prevent the ingress of a liquid or dust between the first structural element (10) and the second profile (30) at the level of the junction organ (50).

5. Assembly (1) according to claim 4, wherein the component (25) is an adhesive, a sealant or a jointing agent

6. Assembly (1) according to any one of claims 1 to 5, wherein the junction surface (s50) of the junction organ (50) comprises blocking asperities (67) configured to block a translation of the junction organ (50) inside the mating cavity (31) along the second direction (Y).

7. Assembly (1) according to any one of claims 1 to 6 wherein the junction organ (50) is a solid element in one piece or a hollow profile

8. Assembly (1) according to any one of claims 1 to 6, wherein the junction organ (50) comprises an expendable element (60) comprising the junction surface (s50), and an internal element (55) configured to be inserted inside the expendable element (60), and to provoke an extension of the expendable element (60) so as to push the junction surface (s50) towards the adhesion surface (s30) when said internal element (55) is inserted inside the expendable element (60).

9. Assembly (1) according to claim 8, wherein the internal element (55) is a solid element in one piece.

10. Assembly (1) according to any one of claims 8 or 9, wherein the internal element (55) presents a cross-section counted perpendicularly to the second direction (Y) which progressively increase, to form externally a ramp configured to provoke the extension of the expendable element (60) when the internal element (55) is inserted inside the expendable element (60).

11. Assembly (1) according to any one of claims 8 to 10, wherein the expendable element (60) comprises at least one expendable agent (61) comprising a main body (63) which comprises part of the fixing hole (51), and at least two lateral tabs (65) comprising the junction surface (s50), each lateral tab (65) being fixedly attached to the main body (63), and being expendable towards the adhesion surface (s30).

12. Assembly (1) according to claim 11, wherein the expendable element (60) comprises a first expendable agent (61), and a second expendable agent (61), the lateral tabs (65) of the first expendable agent (61) being angularly offset from the lateral tabs (65) of the second expendable agent (61) around the second direction (Y).

13. Assembly (1) according to any one of claims 1 to 12 wherein the junction organ (50) comprises a metallic material.

14. Battery holder for a transport vehicle, the battery holder comprising a frame and a floor delimiting between them a housing intended to receive all or part of a battery, said frame comprising at least one assembly (1) according to any one of claims 1 to 13.

15. Electric or hybrid motorized transport vehicle comprising a battery holder according to claim 14.
